# EUROPEAN PATENT APPLICATION

(11) **EP 3 991 964 A1**
(43) Date of publication of application: **04.05.2022**
(21) Application number: 20831801.4
(22) Date of filing: 24.06.2020
(51) Int. Cl.: B32B 15/08, B32B 15/20, B29C 70/68, B32B 3/12

(54) **HONEYCOMB LAYERED BODY AND PRODUCTION METHOD THEREFOR**

(30) Priority: 28.06.2019 JP 2019120769; 31.07.2019 JP 2019141300
(71) Applicant: Inoac Corporation, Nagoya-shi, Aichi 450-0003 (JP)
(72) Inventor: NAKAMURA, Yu, Kaizu-shi, Gifu 503-0536 (JP); YASUI, Tatsuhiko, Anjo-shi, Aichi 446-8504 (JP)
(74) Representative: Berggren Oy
(86) International application number: PCT/JP2020/024885
(87) International publication number: WO 2020/262483

(57) **Abstract**

The invention includes a surface material (21) layered on both surfaces of a honeycomb core (11). The surface material (21) comprises a surface material member (27), which is a porous sheet (25) layered on a carbon fiber body (23), impregnated with a thermosetting resin which is then cured. Thermosetting resin that has exuded from the porous sheet (25) due to the honeycomb core (11) biting into the resin porous sheet (25) is cured at the position where the porous sheet (25) abuts the honeycomb core (11).

## Description

### Technical Field

This invention relates to honeycomb laminated bodies and methods for manufacturing the bodies.

### Background Art

A honeycomb laminated body has been known in which surface materials are laminated on the both sides of a honeycomb core, surface materials which have been impregnated with a thermosetting resin followed by curing. The honeycomb laminated body is so lightweight and highly rigid that it is used in the field of such as aircraft, automobiles, and buildings.

Co-cure molding as a manufacturing method of honeycomb laminated bodies has been known. The co-cure molding includes arranging prepregs on the both sides of a honeycomb core with the prepreg having been impregnated with a thermosetting resin and forming surface materials, by curing the thermosetting resin of the prepregs, simultaneously with bonding the surface materials (prepregs) to the honeycomb core.

Moreover, the honeycomb laminated body is such that the honeycomb core is bonded to the surface materials (prepregs) with the thermosetting resin of the prepregs at the edges of walls of the honeycomb core while the honeycomb core is not bonded to the surface materials at portions (hollow portions) inside cells that are surrounded by the walls of the honeycomb core. For this reason, in order to increase bond strength between the honeycomb core and the surface materials, it is important to favorably form fillets that are formed between the walls of the honeycomb core and the surface materials. The fillets are portions of the thermosetting resin and are formed as followed: The thermosetting resin comes out from the surface materials (prepregs) and rises so as to sandwich the edges of the walls of the honeycomb core.

As a method of favorably forming fillets, use of a viscosity-adjusted epoxy resin composition, as the thermosetting resin of the prepregs, has been proposed (Patent Literature 1).

### Prior Art Document

### Patent Literature

Patent Literature 1: Japanese Patent No. 4639899

### SUMMARY OF INVENTION

### Technical Problem

However, in the method of forming fillets by using a viscosity-adjusted epoxy resin composition as the thermosetting resin of the prepregs, the bond strength between the surface materials and the honeycomb core is not so high because the bond is made only by sandwiching the edges of the walls of the honeycomb core with fillets having risen from the surface materials.

The present invention has been made in view of the above problems, and an object of the present invention is to provide a honeycomb laminated body and a method of manufacturing thereof. Such a honeycomb laminated body features high bond strength between surface materials and a honeycomb core, and properties in which the surface materials are not prone to peel off the honeycomb core.

### Solution to Problem

In accordance with one aspect of the present invention,
there is provided a honeycomb laminated body including a honeycomb core and surface materials laminated on both sides of the honeycomb core,
the surface materials including surface-material members impregnated with a thermosetting resin, the thermosetting resin being cured after impregnation, each of the surface-material members including a carbon-fiber body and a porous sheet laminated on the carbon-fiber body, the carbon-fiber body including fiber bodies laminated on each other, the fiber bodies including either a carbon-fiber woven fabric or a unidirectional carbon-fiber sheet, in which
the honeycomb core abuts on the porous sheet at an abutting position, and in which,
at the abutting position, the honeycomb core bites into the porous sheet and the thermosetting resin having exuded from the porous sheet cures.

In accordance with one aspect of the present invention,
there is provided a honeycomb laminated body having depressions and projections on a surface of at least one side of the honeycomb laminated body,
the honeycomb laminated body including a honeycomb core and surface materials laminated on both sides of the honeycomb core, in which
the surface materials are formed by impregnation with a thermosetting resin and by curing the thermosetting resin, and in which,
at positions of the depressions on the surface, the honeycomb core is crushed in a direction of a thickness of the honeycomb core.

In accordance with one aspect of the present invention,
there is provided a method of manufacturing a honeycomb laminated body including surface materials laminated on both sides of a honeycomb core,
the surface materials including surface-material members impregnated with a thermosetting resin, the thermosetting resin being cured after impregnation, each of the surface-material members including a carbon-fiber body and a porous sheet laminated on the carbon-fiber body, the carbon-fiber body including fiber bodies laminated on each other, the fiber bodies including either a carbon-fiber woven fabric or a unidirectional carbon-fiber sheet, the method including
a step of impregnating the surface-material members with the thermosetting resin,
a step of laminating, on the both sides of the honeycomb core, the surface-material members impregnated with the thermosetting resin in a state of the honeycomb core abutting on the porous sheet so as to provide a heat-compressing laminated body, and
a step of heat-compressing the heat-compressing laminated body, in which the heat-compressing laminated body is compressed to cause the honeycomb core to bite into the porous sheet at biting portions, the thermosetting resin exuding from the porous sheet at the biting portions, and in which both the thermosetting resin having exuded and the thermosetting resin inside the surface-material members cure, by heating, to integrate the surface materials to the honeycomb core.

In accordance with one aspect of the present invention,
there is provided a method of manufacturing a honeycomb laminated body having depressions and projections on a surface of at least one side of the honeycomb laminated body,
the honeycomb laminated body including a honeycomb core and surface materials laminated on both sides of the honeycomb core, the method including
a step of impregnating surface-material members with a thermosetting resin to provide impregnated surface-material members,
a step of laminating the impregnated surface-material members on the both sides of the honeycomb core to provide a heat-compressing laminated body, and
a step of heat-compression shaping the heat-compressing laminated body by using a press-forming mold having a mold surface having protrusions, in which the heat-compressing laminated body is compressed to crush the honeycomb core, with the protrusions of the mold surface, in a direction of a thickness of the honeycomb core to form crushed portions, in which the crushed portions of the honeycomb core are shaped into depressions on a surface of the heat-compressing laminated body, the depressions entailing projections each of which is adjacent to a corresponding one of the depressions, the depressions and the projections constituting a depressions and projections form, and in which both the thermosetting resin inside the impregnated surface-material members and the thermosetting resin having exuded from the impregnated surface-material members cure, by heating, to integrate the surface materials formed from the surface-material members to the honeycomb core.

### Advantageous Effects of Invention

In accordance with the present invention, there is provided a honeycomb laminated body that has such high bond strength between its surface materials and honeycomb core that the surface materials are less prone to peel off the honeycomb core, and provided a method of manufacturing the honeycomb laminated body.

### BRIEF DESCRIPTION OF DRAWINGS

FIG. 1 is a plan view of a honeycomb laminated body according to a first embodiment of the present invention, with the honeycomb laminated body being partially cut away.
FIG. 2 is a cross-sectional view taken along line 2-2 in FIG. 1.
FIG. 3 is a diagram illustrating an impregnation step in a manufacturing method according to the first embodiment of the present invention.
FIG. 4 is a diagram illustrating a lamination step in the manufacturing method according to the first embodiment of the present invention.
FIG. 5 is a diagram illustrating a heat-compressing step in the manufacturing method according to the first embodiment of the present invention.
FIG. 6 is a table showing configurations and evaluations of Examples and a Comparative Example.
FIG. 7 is a plan view of a honeycomb laminated body according to a second embodiment of the present invention, with the honeycomb laminated body being partially cut away.
FIG. 8 is a cross-sectional view taken along line XIII-XIII in FIG. 7.
FIG. 9 is a diagram illustrating an impregnation step in a manufacturing method according to the second embodiment of the present invention.
FIG. 10 is a diagram illustrating a lamination step in the manufacturing method according to the second embodiment of the present invention.
FIG. 11 is a diagram illustrating a heat-compressing step in the manufacturing method according to the second embodiment of the present invention.

### DESCRIPTION OF EMBODIMENTS

Hereinafter, a honeycomb laminated body 10 according to a first embodiment of the present invention and a method of manufacturing thereof will be described with reference to the drawings.

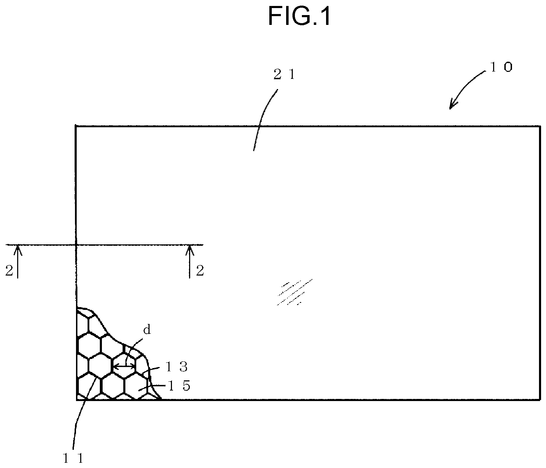

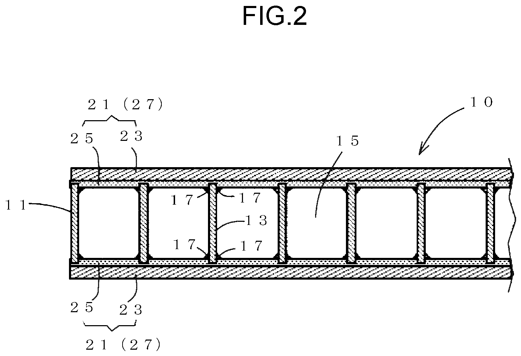

The honeycomb laminated body 10 shown in FIGS. 1 and 2 includes a honeycomb core 11, and surface materials 21 integrally laminated on the both sides of the honeycomb core 11. The honeycomb core 11 is bonded to the surface materials 21 with high bond strength (peel strength of the surface materials).

The honeycomb core 11 includes a plurality of cells 15 that has spaces partitioned by walls 13. The honeycomb core 11 is such that the planar shape of each of the cells 15 is hexagonal (honeycomb) as shown in the present embodiment. Besides this, the planer shape may have a quadrilateral shape, a triangle shape, a pentagonal shape, an octagonal shape, a fluted shape (corrugated shape), a round shape, or any other shape, and is not particularly limited. From a standpoint of strength and ease of manufacture of the honeycomb core 11, the planar shape of the cell is preferably hexagonal.

Examples of the material of the honeycomb core 11 may include paper, metal, resin, ceramic, an aramid fiber sheet, and the like; however, the material is preferably aluminum (aluminum honeycomb core) that particularly has excellent lightweight properties and incombustibility. Moreover, an excessively small cell size (opening) "d" of the honeycomb core 11 results in an increase in weight of the honeycomb core 11, leading to a heavy-weight honeycomb laminated body 10. On the other hand, an excessively large cell size "d" of the honeycomb core 11 causes a decrease in strength of the honeycomb laminated body 10 and formation of recesses in the surface material 21. For this reason, the cell size "d" of the honeycomb core 11 is preferably in the range of 1/32 inches to 1/1 inch, more preferably 1/32 inches to 1/2 inches. Further, an excessively small height (thickness) of the honeycomb core 11 makes it heavy for its bulk and an excessively large height causes the honeycomb core 11 to decrease in strength; therefore, the height is preferably in the range of 2 mm to 150 mm.

The surface material 21 is formed by impregnating a surface-material member 27 with a thermosetting resin followed by curing. The surface-material member 27 is formed by laminating a porous sheet 25 on a carbon-fiber body 23 in which fiber bodies of either carbon-fiber woven fabrics or unidirectional carbon-fiber sheets have been laminated on each other.

The thickness of the surface material 21 preferably ranges from 0.2 mm to 3.0 mm, for each side, in order to prevent natural deformation such as recesses and to achieve lightweight.

The carbon-fiber body 23 is configured with one layer for each side of the honeycomb core 11; however, the configuration is not limited to this. The carbon-fiber body 23 may be configured with a plurality of laminated layers (multi-layer).

The carbon-fiber body 23 is excellent in lightweight and high rigidity. The carbon-fiber body is preferably, in particular, a fabric (woven fabric) that is fabricated by a weave in which fibers are woven in not only one direction. Examples of the fabric preferably include a plain weave, twill weave, and sateen weave fabric which are configured with warp threads and weft threads, and a triaxial woven fabric which is configured with threads in three directions. Further, the carbon-fiber body 23 preferably has a fiber weight of 90 g/m² to 400 g/m² in view of impregnation properties and rigidity of the thermosetting resin. The carbon-fiber body 23 is a carbon-fiber body in which fiber bodies, being either carbon-fiber woven fabrics or unidirectional carbon-fiber sheets, are mutually laminated. The carbon-fiber body 23 is a carbon-fiber body in which carbon-fiber woven fabrics are laminated on each other. Moreover, the carbon-fiber body 23 is a carbon-fiber body in which a carbon-fiber woven fabrics and a unidirectional carbon-fiber sheet are laminated. Furthermore, the carbon-fiber body 23 is a carbon-fiber body in which unidirectional carbon-fiber sheets are laminated such that the direction of one unidirectional carbon-fiber sheet intersects that of another unidirectional carbon-fiber sheet.

The porous sheet 25 is composed of a foam body or a nonwoven fabric. At the abutting position at which the honeycomb core 11 abuts on the porous sheet 25, the honeycomb core 11 bites into the porous sheet 25.

An excessively thin thickness of the porous sheet 25 does not allow the honeycomb core 11 to bite into the sheet. On the other hand, an excessively thick thickness of the porous sheet 25 causes increased weight thereof and insufficient exudation of the thermosetting resin into the honeycomb core 11, insufficient exudation which reduces effects of the increase in the bond strength. For this reason, the thickness of the porous sheet 25 is preferably 0.5 mm to 2 mm.

The foam body is preferably a foam body having an open-cell structure in order to enable the impregnation with the thermosetting resin. Examples of such a foam body include a urethane-resin foam body and a melamine-resin foam body. Further, the melamine-resin foam body has such an excellent flame retardance that it is preferably used in cases where the honeycomb laminated body 10 is required to have flame retardance. Regarding the density (JIS K 7222) of the foam body, an excessively low density degrades the impregnation and holding properties of the thermosetting resin while an excessively high density prevents the honeycomb core from biting into the foam body. For this reason, the density of the foam body is preferably 5 kg/m³ to 100 kg/m³, more preferably 20 kg/m³ to 80 kg/m³.

Examples of the nonwoven fabric include a carbon-fiber nonwoven fabric, glass nonwoven fabric, nylon nonwoven fabric, and PET nonwoven fabric. Further, regarding the basis weight of the nonwoven fabric, an excessively small basis weight degrades the impregnation and holding properties while an excessively large basis weight prevents the honeycomb core from biting into the foam body. Therefore, the basis weight is preferably 2 g/m² to 200 g/m².

Moreover, as shown in FIG. 2, at the positions where the honeycomb core 11 bites into the porous sheets 25, fillets 17 are formed. The fillets 17 are formed as follows: The porous sheets 25 are compressed to cause the thermosetting resin to exude from the sheets. The thus-exuding thermosetting resin rises along the walls 13 of the honeycomb core 11, which have bitten into the sheets, and sandwiches the edges of the walls 13 followed by curing to form the fillets.

The thermosetting resin is not particularly limited; however, the thermosetting resin itself is required to have rigidity to some extent in order to enhance the rigidity of the honeycomb laminated body 10. The thermosetting resin can be selected from the group consisting of an epoxy resin, a phenol resin, a mixture of an epoxy resin and a phenol resin, and a urethane resin. Moreover, in the case where the honeycomb laminated body 10 is required to have flame retardance, the thermosetting resin is preferably flame retardant. The phenol resin is preferably used because of its excellent flame retardance. The impregnation amount of the thermosetting resin is preferably 50% by weight to 80% by weight with respect to the surface-material member after impregnation.

The integration of the honeycomb core 11 to the surface materials 21 is carried out as follows: The thermosetting resin contained in the surface-material member 27 exudes from the porous sheet 25 to come into contact with the honeycomb core 11 during manufacturing of the honeycomb laminated body 10, thereby forming the fillets 17 described above followed by curing.

Next, a method of manufacturing the honeycomb laminated body 10 according to the first embodiment of the present invention will be described.

The method of manufacturing the honeycomb laminated body 10 according to the embodiment includes an impregnation step, a lamination step, and a heat-compressing step.

In the impregnation step, a surface-material member in which a porous sheet has been laminated on a carbon-fiber body is impregnated with a thermosetting resin, thereby preparing an impregnated surface-material member. One example of the impregnation step is described below.

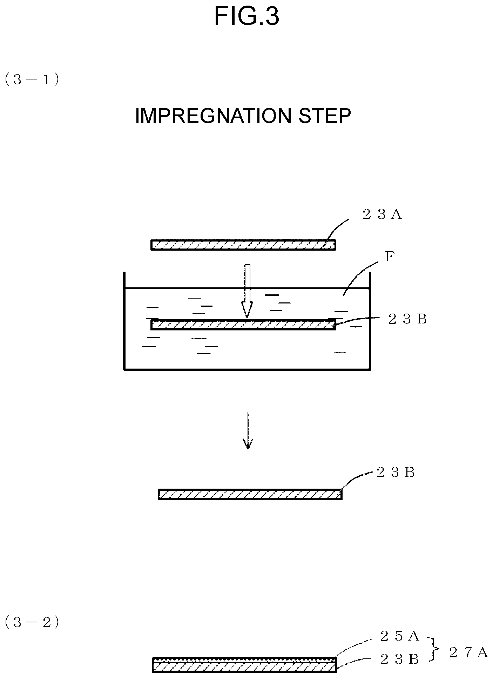

In the case of FIG. 3, as shown in diagram (3-1) in FIG. 3, a carbon-fiber body 23A is impregnated with a thermosetting resin F to form an impregnated carbon-fiber body 23B. The carbon-fiber body 23A and thermosetting resin F are the same as the carbon-fiber body and thermosetting resin that are described in the above description of the honeycomb laminated body 10. The thermosetting resin F used for the impregnation is an uncured liquid.

Next, as shown in diagram (3-2) of FIG. 3, a porous sheet 25A is laminated on one side of the impregnated carbon-fiber body 23B, thereby forming an impregnated surface-material member 27A. At that time, tackiness (adhesiveness) of the thermosetting resin that is adhering to the surface of the impregnated carbon-fiber body 23B, allows the porous sheet 25A to be sticked on the one side of the impregnated carbon-fiber body 23B. The porous sheet 25A, which has been laminated on the impregnated carbon-fiber body 23B, is impregnated with the thermosetting resin that is adhering to the surface of the impregnated carbon-fiber body 23B, surface which is in contact with the porous sheet 25A. The porous sheet 25A is the same as the porous sheet that is described in the above description of the honeycomb laminated body 10.

The thermosetting resin F is preferably dissolved in a solvent in order to facilitate the impregnation. Then, after the impregnation, the impregnated surface-material member 27A is dried at a low temperature at which the curing reaction of the thermosetting resin F does not occur, thereby removing the solvent.

The impregnation can be carried out by an appropriate means, such as, a method of immersing the carbon-fiber body 23A into a tank charged with a liquid of the thermosetting resin F, a method of spraying the thermosetting resin F onto the carbon-fiber body 23A with a spray, or a method of applying the thermosetting resin F onto the carbon-fiber body 23A with a roll coater.

Note that, in the case where each of the carbon-fiber bodies 23 of the surface materials 21 of the honeycomb laminated body 10 described above is a multi-layer, the impregnated surface-material member 27A described above is formed by laminating the porous sheet 25A described above on the multi-layer after a plurality of the impregnated carbon-fiber bodies 23B described above has been laminated into the multi-layer.

The impregnation step described above may be such that the impregnated surface-material member 27A is formed by impregnating each of the porous sheet 25A and the carbon-fiber body 23A with the thermosetting resin F, followed by laminating them. Further, the step may also be as follows: A yet-to-be-impregnated surface-material member is prepared, in advance, by laminating the porous sheet 25A on the carbon-fiber body 23A. Then the thus-laminated surface-material member is impregnated with the thermosetting resin to form the impregnated surface-material member 27A.

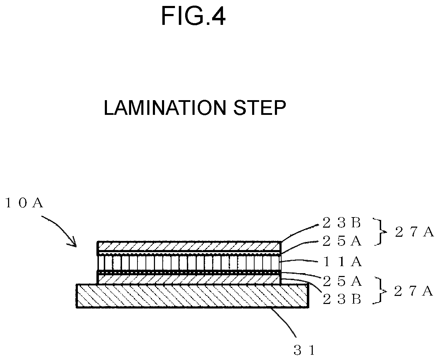

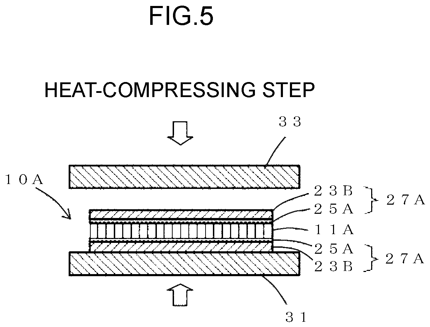

In the lamination step, as shown in FIG. 4, the impregnated surface-material members 27A are disposed on both sides of a honeycomb core 11A to form a heat-compressing laminated body 10A. In this case, each of the impregnated surface-material members 27A is disposed such that the porous sheet 25A is located inward (on the honeycomb core 11A side) and such that the porous sheet 25A is in contact with the honeycomb core 11A with both facing each other. The honeycomb core 11A is as described in the case of the honeycomb laminated body 10 described above. Note that the laminating work may be performed in such a manner that the impregnated surface-material member 27A, the honeycomb core 11A, and the impregnated surface-material member 27A are placed one on top of another, in this order, on the upper surface of a lower mold 31 of a press forming machine that is to be used in the next step, the heat-compressing step (FIG. 5). Moreover, the impregnated surface-material member 27A is preferably equal, in planar size, to the honeycomb core 11A.

In the heat-compressing step, as shown in FIG. 5, the heat-compressing laminated body 10A is compressed and heated with the lower mold 31 and upper mold 33 of the press forming machine. Note that honeycomb laminated bodies are actually produced, in advance, with different spaces between the lower mold 31 and the upper mold 33. Then the resulting honeycomb laminated bodies are measured in terms of thicknesses of their surface materials, thereby finding a space between the lower mold 31 and the upper mold 33 which can provide the targeted thickness of the surface material. In the heat-compressing step, spacers are set at appropriate positions between the lower mold 31 and the upper mold 33 such that the space between the lower mold 31 and the upper mold 33 becomes equal to the predetermined space. Moreover, the means for heating the heat-compressing laminated body is not particularly limited; however, it is simple that means for heating, such as heaters, are set in the lower mold 31 and the upper mold 33 so as to heat the heat-compressing laminated body via the lower mold 31 and the upper mold 33. The heating temperature is equal to or higher than the curing reaction temperature of the thermosetting resin.

In the heat-compressing step, upon compressing the heat-compressing laminated body 10A, the thermosetting resin with which the impregnated carbon-fiber body 23B have been impregnated is squeezed out and into, through impregnation, the porous sheet 25A in contact with the impregnated carbon-fiber body 23B, with the thermosetting resin allowing the whole of the impregnated surface-material member 27A to be impregnated with it. Note that, although the porous sheet 25A has already been impregnated with the thermosetting resin in the impregnation step described above, the heat-compressing step causes the porous sheet 25A to be further impregnated with the thermosetting resin. Moreover, in the heat-compressing step, the portions of the porous sheet 25A at which the honeycomb core 11A abuts thereon, are compressed and recessed by the edges of the walls of the honeycomb core 11A, and the honeycomb core 11A bites into the thus-recessed portions of the porous sheet 25A. At the portions into which the honeycomb core 11A bites, the thermosetting resin inside the porous sheet 25A exudes therefrom. The thus-exuding thermosetting resin rises along the walls of the honeycomb core 11A and becomes into a state of sandwiching the edges of the walls.

The thermosetting resin starts curing reaction on heating, which causes the impregnated surface-material members 27A to become into the surface materials 21. This forms the honeycomb laminated body 10 in which these surface materials 21 are integrated with the honeycomb core 11A(11). Further, at the abutting positions between the honeycomb core 11A and the porous sheets 25A, the thus-exuding thermosetting resin rises along the walls of the honeycomb core 11A and cures in a state of sandwiching the edges of the walls of the honeycomb core 11A, thereby forming the fillets 17. After that, the heat-compressing is released to complete the honeycomb laminated body 10.

### (Examples)

An impregnated carbon-fiber woven fabric was prepared by immersing a twill-weave carbon-fiber woven fabric (manufactured by TEIJIN LIMITED, product type; W-3161, fiber weight 200 g/m²) into a solution of a phenol resin (manufactured by Sumitomo Bakelite Co., Ltd., product type: PR-55791B, resin concentration 60 wt% ethanol solution), followed by taking it out. The carbon-fiber woven fabric was cut into pieces with a planar size of 200 × 350 mm (weight 14 g/sheet) for use in Examples.

In the same manner, the required number of the impregnated carbon-fiber woven fabrics were prepared for each of Examples and a Comparative Example. Of the impregnated carbon-fiber woven fabrics used for each Example, two fabrics were prepared such that a porous sheet was sticked on one side of each of the two impregnated carbon-fiber woven fabrics by utilizing the tackiness of the thermosetting resin with which the carbon-fiber woven fabric had been impregnated.

Examples 1 to 3 and Examples 5 and 6 used, as porous sheets, the sheet-shaped flexible urethane foams (open-cell structure, manufactured by INOAC CORPORATION, product type: MF-50, thickness 0.7 mm, density 30 kg/m³). Example 4 used carbon nonwoven fabrics (manufactured by AWA PAPER & TECHNOLOGICAL COMPANY, Inc., product type: CARMIX CFRP, thickness 1 mm, basis weight 120 g/m²).

Note that, on the impregnated carbon-fiber woven fabrics for the Comparative Example, no porous sheet was sticked.

After that, both the impregnated carbon-fiber woven fabrics with the porous sheets sticked thereon and the impregnated carbon-fiber woven fabrics without porous sheets, were naturally dried at room temperature of 25 °C for two hours and then further dried under an atmosphere at 60 °C for one hour, thereby preparing both prepregs with porous sheets and prepregs without porous sheets.

As a honeycomb core, for each of the Examples and Comparative Example, the following honeycombs cut in a planar size of 200 × 350 mm were used. Such honeycombs were 1/8-inch cell-size aluminum honeycombs (thickness 3 mm, weight 37g/sheet), a 1-inch cell-size aluminum honeycomb (thickness 3 mm, weight 40g), and a 1/8-inch cell-size aluminum honeycomb (thickness 2 mm, weight 25g).

Next, for each of the Examples, the required number of the prepregs without porous sheets, the prepreg with porous sheet, the aluminum honeycomb, the prepreg with porous sheet, and the required number of the prepregs without porous sheets were arranged in this order one on top of another on the lower mold, made of SUS, the surface of which had been applied in advance with a mold releasing agent. In this arrangement, the porous sheets were arranged to abut on the aluminum honeycomb. With this configuration, the heat-compressing laminated body in which the prepregs were arranged on both sides of the honeycomb core was set on the lower mold, with the honeycomb core abutting on the porous sheets of the prepregs. The laminated body configured with both the prepregs without porous sheets and the prepreg with porous sheet, corresponds to the impregnated surface-material member. Note that, for the Comparative Example, the required number of the prepregs without porous sheets, the aluminum honeycomb, and the required number of the prepregs without porous sheets were arranged in this order one on top of another, thereby configuring the heat-compressing laminated body that was set on the lower mold.

At four corners of the lower mold of the press forming machine, spacers made of SUS were set that had a thickness in accordance with the thickness of the honeycomb laminated body of each of the Examples and Comparative Example. Then the heat-compressing laminated body set on the lower mold was pressed with the upper mold (flat plate shape) at 150 °C for 30 minutes, thereby compressing and heating the heat-compressing laminated body to cause the phenol resin to react and cure. At that time, the heating of the heat-compressing laminated body was carried out with cast-in heaters attached to the lower and upper molds for press forming. Note that the compressing and heating was carried out by pressing by the upper mold (flat plate shape), with a surface pressure (press pressure) of 10 MPa applied for Examples 1 and 2, Examples 4 to 6, and the Comparative Example, with a surface pressure (press pressure) of 15 MPa applied for Example 3.

Then, after the lower mold and the upper mold had been cooled at room temperature, the lower mold and the upper mold were released to give a honeycomb laminated body. The resulting honeycomb laminated body of each of the Examples is one in which the surface materials are integrally laminated on both sides of the aluminum honeycomb, surface materials which each have been produced by laminating the prepreg with porous sheet (impregnated surface-material member) and the prepregs without porous portions sheets into a laminated body, followed by curing. In the honeycomb laminated body of each of the Examples, the aluminum honeycomb has bitten into the porous sheets, with fillets having been formed at positions of the biting. On the other hand, the honeycomb laminated body of the Comparative Example is one in which the surface materials are integrally laminated on both sides of the aluminum honeycomb, surface materials which each have been produced by laminating a plurality of the prepregs without porous sheets, followed by curing. This aluminum honeycomb does not bite into the porous sheets, with no fillet being formed.

Moreover, the honeycomb laminated body of each of the Examples and Comparative Example was evaluated in terms of the flexural modulus of elasticity of the surface material. According to the result of the evaluation, the honeycomb laminated bodies are rated as follows: The honeycomb laminated body is rated "∘" in cases where their flexural modulus of elasticity is not less than 20 MPa and where there is no peeling-off of the honeycomb laminated body. In a case other than these cases (i.e., in the case where the flexural modulus of elasticity is less than 20 MPa and/or where there is peeling-off of the honeycomb laminated body), the honeycomb laminated body is rated "×."

The measurements were performed according to JIS K 7074.

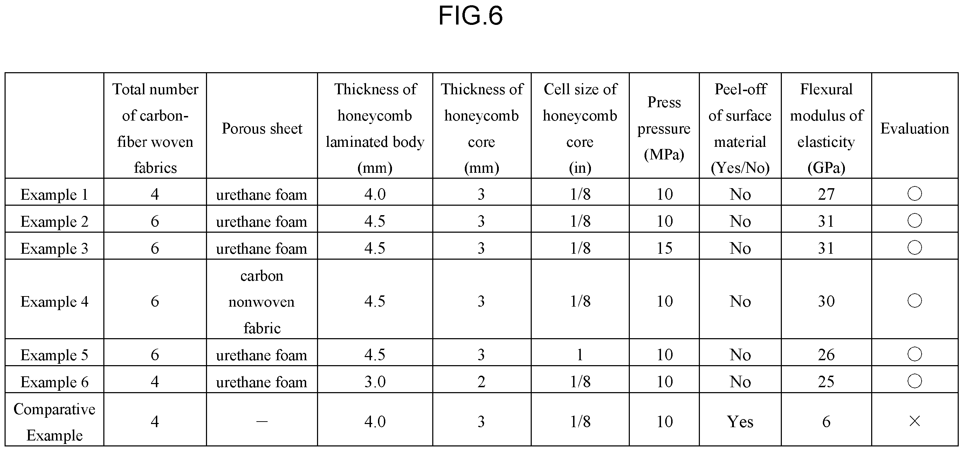

The configuration and rate of each of the Examples and Comparative Example are summarized in FIG. 6. Each of the honeycomb laminated bodies of Examples 1 to 6 has a flexural modulus of elasticity ranging from 25 GPa to 31 GPa and exhibits no peeling-off of its surface material, so that the honeycomb laminated body is rated "∘." The honeycomb laminated bodies of Examples 1 to 6 have both high peel strength of the surface materials and high rigidity of the bodies, which are resulted from both the enhanced bond strength due to the biting of the honeycomb cores into the porous sheets of the surface materials and the enhanced bond strength due to the fillets.

In contrast, the honeycomb laminated body of the Comparative Example has a flexural modulus of elasticity of 6 GPa, so that the honeycomb laminated body is rated "×." The honeycomb laminated body of the Comparative Example is such that the surface materials (prepregs) have cured with the surface materials only abutting on the honeycomb core, without any biting of the honeycomb core into the surface materials, and without any formation of fillets. Therefore, compared to each of the Examples, the honeycomb laminated body of the Comparative Example has such low bond strength of the surface materials that the surface materials are prone to peel off and that the honeycomb laminated body exhibits largely reduced rigidity.

In this way, in accordance with the present invention, the honeycomb laminated body can be obtained in which a honeycomb core has bitten into porous sheets of surface materials, which have been laminated on both sides of the honeycomb core, to form fillets. Therefore, the bond between the honeycomb core and the surface materials becomes strong (high peel strength of the surface materials), which results from both the effect of enhancing the bond strength due to the biting by the honeycomb core and the effect of enhancing the bond strength due to the fillets.

Moreover, the method of manufacturing the honeycomb laminated body 10 according to the present invention eliminates the need for the step in which the surface materials are formed in advance and then bonded to the honeycomb core with an adhesive. That is, the method of manufacturing the honeycomb laminated body 10 according to the present invention allows, when curing the thermosetting resin of the prepregs, both the formation of the surface materials (prepregs) and the bonding of the honeycomb core to be performed simultaneously, resulting in streamlining of the manufacturing steps.

### <Second Embodiment>

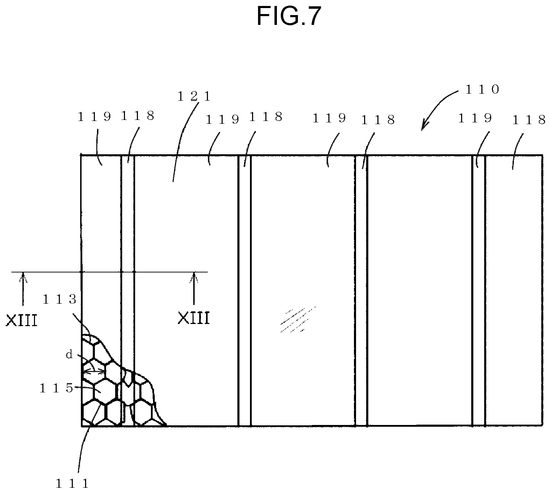

Next, as a second embodiment according to the present invention, a honeycomb laminated body 110 having depressions 118 and projections 119 on the surface thereof and a manufacturing method thereof will be described with reference to FIGS. 7 to 11. Descriptions of the same structure and manufacturing method as those of the first embodiment described above will be omitted.

Incidentally, conventional honeycomb laminated bodies which are each provided with depressions and projections on a surface thereof require that the depressions and projections be formed in advance on the surface of a honeycomb core. This poses a problem of increasing manufacturing cost. Further, when laminating a surface material on the surface of the honeycomb core on which the depressions and projections have been formed, there is possibility that the surface material cannot be correctly laminated on the honeycomb core because, for example, the surface material would rise away from the surface at positions of the depressions and projections.

Further, in the method of forming fillets using a viscosity-adjusted epoxy resin composition as the thermosetting resin of the prepregs, the bond strength has been not so high because the bond is made only by sandwiching the edges of the walls of the honeycomb core with fillets having risen from the inner surfaces (back surfaces) of the surface materials.

The second embodiment of the present invention has been made in view of the above problems and is to provide a honeycomb laminated body and a method of manufacturing thereof. Such a honeycomb laminated body has no need for preforming of projections and depressions on the surface of a honeycomb core. The honeycomb laminated body is such that the projections and depressions can be formed on the surface of the laminated body by forming the projections and depressions on the honeycomb core simultaneously with integrally laminating the surface materials on the honeycomb core.

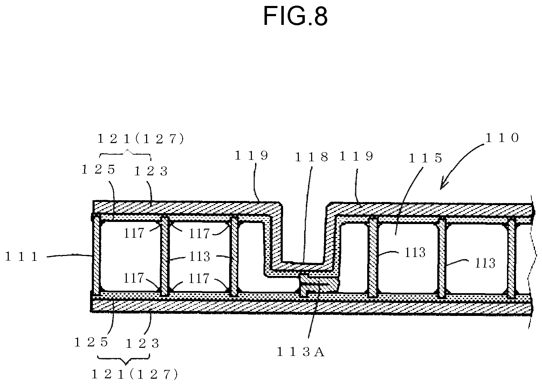

As shown in FIGS. 7 and 8, the honeycomb laminated body 110 according to the second embodiment includes depressions 118 and projections 119 on a surface of the honeycomb laminated body. The honeycomb laminated body 110 includes a honeycomb core 111, and surface materials 121 integrally laminated on both sides of the honeycomb core 111. On the surface of the honeycomb laminated body 110, the depressions 118 and projections 119 are formed, which enhances the bond strength (peel strength of the surface materials) between the honeycomb core 111 and the surface materials 121.

Note that each of the projections 119 is the adjacent portion to the corresponding one of the depressions 118. The formation of the depression 118 on the surface causes the portion adjacent to the depression 118 to become relatively tall, which entails the formation of the corresponding projection 119.

The honeycomb core 111 according to the embodiment is such that a wall 113A (see FIG. 8) located at the portion of the depression 118 to be formed on the surface is compressed in the direction of thickness (height) of the honeycomb core 111 into a state of being crushed.

An excessively small cell size (opening) "d" of the honeycomb core 111 causes, for example, an increase in weight of the honeycomb core 111, leading to a heavy one, and a decrease in ease of crushing the honeycomb core in the direction of the thickness, leading to difficulty of forming the depressions 118 and projections 119 and any other difficult. In contrast, an excessively large cell size (opening) "d" of the honeycomb core 111 causes, for example, a decrease in strength of the honeycomb laminated body 110 and a formation of recesses of the surface material 121. For this reason, the cell size (opening) "d" of the honeycomb core 111 is preferably in the range of 1/32 inches to 1/1 inch, more preferably 1/32 inches to 1/2 inches.

The structure and materials of the surface materials 121, carbon-fiber bodies 123, porous sheets 125, and fillets 117 are the same as those in the first embodiment described above. Further, the materials of the foam bodies and nonwoven fabrics, the type of resin used as the thermosetting resin, etc. are the same as those in the first embodiment described above.

Next, a method of manufacturing the honeycomb laminated body 110 according to the second embodiment of the present invention will be described, with the honeycomb laminated body 110 having the depressions 118 and projections 119 on the surface thereof.

The method of manufacturing the honeycomb laminated body 110 according to the embodiment includes an impregnation step, a lamination step, and a heat-compression shaping step.

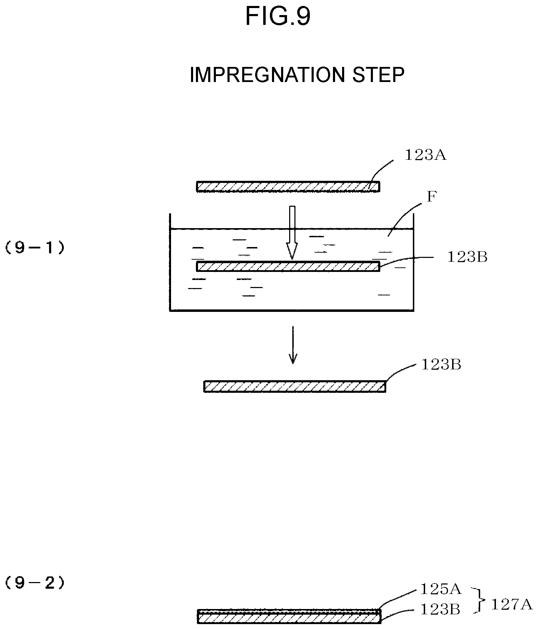

The impregnation step shown in the diagrams (9-1) and (9-2) of FIG. 9 is the same as the impregnation of the first embodiment described above. In the impregnation step, a surface-material member 127 in which a porous sheet 125A has been laminated on a carbon-fiber body 123B is impregnated with the thermosetting resin F to prepare an impregnated surface-material member 127A.

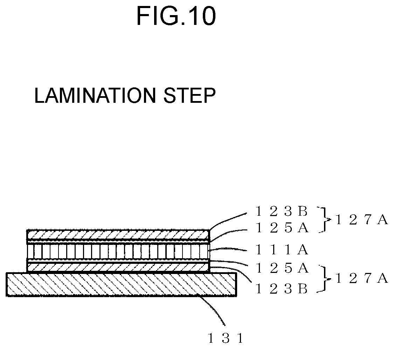

The lamination step shown in FIG. 10 as well is the same as the lamination step of the first embodiment described above. As shown in FIG. 10, the impregnated surface-material members 127A are arranged on both sides of a honeycomb core 111A to obtain a heat-compressing laminated body 110A.

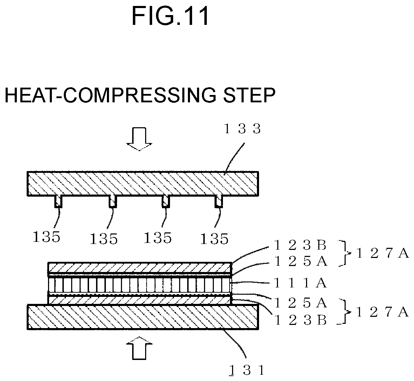

In the heat-compression shaping step, as shown in FIG. 11, the heat-compressing laminated body 110A is compressed and heated with the lower mold 131 and upper mold 133 of a press forming machine. On the mold surface (press face) of the upper mold 133, protrusions 135 are disposed to form the depressions 118 of the honeycomb laminated body 110. The protrusions 135 each have a shape corresponding to that of the depressions 118, and are disposed at the positions corresponding to the depressions 118. The height (the amount of protrusion from the mold surface) of the protrusions 135 is smaller than the thickness of the honeycomb laminated body 110 and is preferably smaller than the thickness of the honeycomb core 111A.

The degree of compression of the heat-compressing laminated body 110A with the press forming machine is controlled such that the thickness of the surface material 121 of the honeycomb laminated body 110 becomes in the range from 0.2 mm to the thickness of the surface material 121 (in the uncompressed state). Note that the honeycomb laminated bodies 110 are actually produced, in advance, with different spaces between the lower mold 131 and the upper mold 133. Then the resulting honeycomb laminated bodies 110 are measured in terms of thicknesses of their surface materials 121, thereby finding a space between the lower mold 131 and the upper mold 133 which can provide the targeted thickness of the surface material 121. In the heat-compression shaping step, spacers are set at appropriate positions between the lower mold 131 and the upper mold 133 such that the space between the lower mold 131 and the upper mold 133 becomes equal to the predetermined space. Moreover, the means for heating the heat-compressing laminated body 110A is not particularly limited; however, it is simple that means for heating, such as heaters, are set in the lower mold 131 and the upper mold 133 so as to heat the heat-compressing laminated body 110A via the lower mold 131 and the upper mold 133. The heating temperature is equal to or higher than the curing reaction temperature of the thermosetting resin.

In the heat-compression shaping step, upon compressing the heat-compressing laminated body 110A, the thermosetting resin with which the impregnated carbon-fiber body 123B have been impregnated is squeezed out and into, through impregnation, the porous sheet 125A in contact with the impregnated carbon-fiber body 123B, which thereby enables the thermosetting resin to permeate, through impregnation, into the whole of the impregnated surface-material member 127A. Note that, although the porous sheet 125A has already been impregnated with the thermosetting resin in the impregnation step described above, the heat-compression shaping step causes the porous sheet 125A to be further impregnated with the thermosetting resin. Moreover, in the heat-compression shaping step, the portions of the porous sheet 125A at which the honeycomb core 111A abuts thereon, are compressed and recessed by the edges of the walls of the honeycomb core 111A, and the honeycomb core 111A bites into the thus-recessed portions. At the portions into which the honeycomb core 111A bites, the thermosetting resin inside the porous sheet 125A exudes therefrom. The thus-exuding thermosetting resin rises along the walls of the honeycomb core 111A and becomes into a state of sandwiching the edges of the walls.

Moreover, in the heat-compressing laminated body 110A, the walls of the honeycomb core 111 are pushed and crushed in the direction of the thickness, at their portions compressed by the protrusions 135 of the upper mold 133, thereby forming the depressions on the surface of the heat-compressing laminated body 110A.

The thermosetting resin starts curing reaction on heating. Curing of the thermosetting resin causes the formation of the surface materials 121 from the impregnated surface-material members 127A, and the integral bonding of the thus-formed surface materials 121 to the honeycomb core 111A (11). This forms the honeycomb laminated body 110, which has the depressions 118 and projections 119 on the surface thereof. Further, at the abutting positions between the honeycomb core 111 and the porous sheets 125A, the thermosetting resin having exuded rises along the walls of the honeycomb core 111A and cures in a state of sandwiching the edges of the walls of the honeycomb core 111A. This forms the fillets117. After that, the heat-compressing is released to complete the honeycomb laminated body 110, which has the depressions 118 and projections 119 on the surface thereof. The depressions 118 and projections 119 on the surface are configured with both the portions being depressions 118 which are formed by the protrusions 135 of the upper mold 133 and the portions being projections 119 each of which has relatively become into a projection at a location adjacent to the corresponding one of the depressions 118.

Not that, in the description of the embodiment described above, the example has been described in which the honeycomb core bites into the porous sheets; however, the configuration may be as follows: The porous sheets are not disposed and the depressions and projections are formed on the surface of the honeycomb laminated body without biting of the honeycomb core into porous sheets.

Moreover, in the second embodiment, the example has been described in which a plurality of parallel depressions is formed on the surface; however, the depressions may be formed and arranged in a diamond-shaped lattice shape, in a curved-line structure such as circles or waves, or in any other shape. Further, the example has been described in which the depressions and projections are disposed only on one side of the honeycomb laminated body; however, the depressions and projections may be disposed on both sides of the honeycomb laminated body. In this case, protrusions for forming the depressions are disposed on both the mold surfaces of both the lower and upper molds of the press forming machine.

Furthermore, the depressions and projections that have different depressions having different depths may be formed by locally changing the degree of crushing the wall portions of the honeycomb core such that the depths of the depressions formed in the surface of the honeycomb laminated body are locally different. In this case, the protrusions to form the depressions are locally changed in height, with the protrusions being disposed on the mold surfaces of the upper and lower molds of the press forming machine.

### (Examples)

An impregnated carbon-fiber woven fabric (carbon-fiber body) was prepared by immersing a twill-weave carbon-fiber woven fabric (manufactured by TEIJIN LIMITED, product type; W-3161, fiber weight 200 g/m²) into a solution of a phenol resin (manufactured by Sumitomo Bakelite Co., Ltd., product type: PR-55791B, resin concentration 60 wt% ethanol solution), followed by taking it out. The carbon-fiber woven fabric (carbon-fiber body) was cut into pieces with a planar size of 200 × 350 mm (weight 14 g/sheet) for use in Examples.

In the same manner, the required number of the impregnated carbon-fiber woven fabrics (carbon-fiber bodies) were prepared. Of the impregnated carbon-fiber woven fabrics, two fabrics used for Example 1 were prepared such that a porous sheet was sticked on one side of each of the two fabrics by utilizing the tackiness of the thermosetting resin with which the carbon-fiber woven fabric had been impregnated. Note that, on the impregnated carbon-fiber woven fabrics used for Example 2, no porous sheet was sticked.

As porous sheets, the sheet-shaped flexible urethane foams (open-cell structure, manufactured by INOAC CORPORATION, product type: MF-50, thickness 0.7 mm, density 30 kg/m³) were used.

After that, both the impregnated carbon-fiber woven fabrics with the porous sheets sticked thereon and the impregnated carbon-fiber woven fabrics without porous sheets, were naturally dried at room temperature of 25 °C for two hours and then further dried under an atmosphere at 60 °C for one hour, thereby preparing both prepregs with porous sheets and prepregs without porous sheets.

As honeycomb cores, 1/8-inch cell-size aluminum honeycomb (manufactured by SHOWA AIRCRAFT INDUSTRY CO., LTD., product type: AL1/8-5052-.001, thickness 3 mm, weight 37g/sheet) was cut into pieces in a planar size of 200 × 350 mm and the thus-cut sheets were used.

Next, for Example 1, two sheets of the prepregs without porous sheets, one sheet of the prepreg with porous sheet, the honeycomb core, one sheet of the prepreg with porous sheet, and two sheets of the prepregs without porous sheets were arranged in this order one on top of another on a lower mold made of SUS of a press forming machine, with the surface of the lower mold having been applied in advance with a mold releasing agent. In this arrangement, the porous sheets were arranged to abut on the honeycomb core. With this configuration, the heat-compressing laminated body in which the prepregs were arranged on both sides of the honeycomb core was set on the lower mold of the press forming machine, with the honeycomb core abutting on the porous sheets of the prepregs. Note that the laminated body configured with both the prepregs without porous sheets and the prepreg with porous sheet, corresponds to the impregnated surface-material member.

On the other hand, for Example 2, two sheets of the prepregs without porous sheets, the honeycomb core, and two sheets of the prepregs without porous sheets were arranged in this order one on top of another on a lower mold made of SUS the surface of which had been applied in advance with a mold releasing agent. Note that the laminated body of the prepregs without porous sheets corresponds to the impregnated surface-material member.

In Example 1 and Example 2, at four corners of the lower mold, spacers made of SUS were set which had a thickness (4.5 mm in Example 1 and 4.0 mm in Example 2) in accordance with the thickness of the laminated body to be prepared in each Example. Moreover, the heat-compressing laminated body placed on the lower mold was pressed with an upper mold the mold surface of which was provided with protrusions (protrusions for forming the depressions) having a diamond-shaped lattice shape. In this way, the heat-compressing laminated body was compressed and heated with the lower and upper molds, thereby causing the phenol resin to react and cure. The protrusions each have a width of 1 mm and a depth of 3 mm, and intervals between the protrusions are each 100 mm. The compressing and heating were carried out under an applied surface pressure of 10 MPa at 150 °C for 30 minutes. In this case, the heating of the heat-compressing laminated body was carried out with cast-in heaters attached to the lower mold and the upper mold.

Then, after the lower mold and the upper mold had been cooled at room temperature, the lower mold and the upper mold were released to give a honeycomb laminated body that has depressions 118 and projections 119 on the surface thereof. The thus-formed depressions 118 and projections 119 are configured with the depressions with a diamond-shaped lattice shape which have been formed by compressing by the protrusions with a diamond-shaped lattice shape of the upper mold and the portions (portions between the depressions) which are each adjacent to the corresponding one of the depressions.

Moreover, in Example 1 that used the prepregs with porous sheets, the aluminum honeycomb has bitten into the porous sheets of the prepregs with porous sheets, and the fillets have been clearly formed at the positions of the biting.

On the other hand, in Example 2 that did not use prepregs with porous sheets, the prepregs without porous sheets and the aluminum honeycomb have abutted on each other and the thermosetting resin has cured, with almost no fillet having been formed at the positions of the abutting.

In this way, according to the embodiment, the depressions 118 and projections 119 can be formed on the surface of the honeycomb laminated body simultaneously with the integrally laminating of the surface materials on the honeycomb core.

Moreover, the configuration in which the honeycomb core bites into the porous sheets of the surface materials and the thermosetting resin having exuded from the porous sheets is cured, allows the well formation of the fillets and the high bond strength (peel strength) between the honeycomb core and the surface materials.

This patent application is based on Japanese Patent Application (No. 2019-120769) filed on Jun. 28, 2019 and Japanese Patent Application (No. 2019-141300) filed on Jul. 31, 2019, and the contents thereof are all incorporated herein by reference.

### INDUSTRIAL APPLICABILITY

The present invention provides a honeycomb laminated body that has such high bond strength between its surface materials and honeycomb core that the surface materials are less prone to peel off the honeycomb core, and provides a method of manufacturing the honeycomb laminated body.

## Claims

1. A honeycomb laminated body, comprising:
a honeycomb core; and
surface materials laminated on both sides of the honeycomb core, the surface materials including:
surface-material members impregnated with a thermosetting resin, the thermosetting resin being cured after impregnation, each of the surface-material members including:
a carbon-fiber body; and
a porous sheet laminated on the carbon-fiber body, the carbon-fiber body including:
fiber bodies laminated on each other, the fiber bodies including a carbon-fiber woven fabric or a unidirectional carbon-fiber sheet,
wherein the honeycomb core abuts on the porous sheet at an abutting position, and
wherein, at the abutting position, the honeycomb core bites into the porous sheet, and the thermosetting resin having exuded from the porous sheet cures.

2. A honeycomb laminated body having depressions and projections on a surface of at least one side of the honeycomb laminated body, the honeycomb laminated body comprising:
a honeycomb core; and
surface materials laminated on both sides of the honeycomb core,
wherein the surface materials are formed by impregnation with a thermosetting resin and by curing the thermosetting resin, and
wherein, at positions of the depressions on the surface, the honeycomb core is crushed in a direction of a thickness of the honeycomb core.

3. The honeycomb laminated body of claim 2, wherein the honeycomb core is composed of an aluminum honeycomb.

4. The honeycomb laminated body of claim 3,
wherein the surface materials include:
surface-material members impregnated with the thermosetting resin, the thermosetting resin being cured after impregnation, each of the surface-material members including:
a carbon-fiber body; and
a porous sheet laminated on the carbon-fiber body, the carbon-fiber body including:
fiber bodies laminated on each other, the fiber bodies including a carbon-fiber woven fabric or a unidirectional carbon-fiber sheet,
wherein the honeycomb core abuts on the porous sheet at an abutting position, and
wherein, at the abutting position, the honeycomb core bites into the porous sheet, and the thermosetting resin having exuded from the porous sheet cures.

5. The honeycomb laminated body of claim 1 or 4, wherein the porous sheet has a thickness of 0.5 mm to 2 mm.

6. The honeycomb laminated body of claim 1 or 4, wherein the porous sheet is composed of a foam body or a nonwoven fabric.

7. The honeycomb laminated body of claim 6, wherein the porous sheet is composed of a foam body having a density of 5 kg/m³ to 100 kg/m³ or a nonwoven fabric having a basis weight of 2 g/m² to 200 g/m².

8. The honeycomb laminated body of any one of claims 1 to 7, wherein the honeycomb core has a cell size of 1/32 inches to 1/1 inch.

9. A method of manufacturing a honeycomb laminated body including surface materials laminated on both sides of a honeycomb core, the surface materials including surface-material members impregnated with a thermosetting resin, the thermosetting resin being cured after impregnation, each of the surface-material members including a carbon-fiber body and a porous sheet laminated on the carbon-fiber body, the carbon-fiber body including fiber bodies laminated on each other, the fiber bodies including a carbon-fiber woven fabric or a unidirectional carbon-fiber sheet, the method comprising:
a step of impregnating the surface-material members with the thermosetting resin;
a step of laminating, on both sides of the honeycomb core, the surface-material members impregnated with the thermosetting resin in a state in which the honeycomb core abuts on the porous sheet so as to provide a heat-compressing laminated body; and
a step of heat-compressing the heat-compressing laminated body, wherein the heat-compressing laminated body is compressed to cause the honeycomb core to bite into the porous sheet at biting portions, the thermosetting resin exuding from the porous sheet at the biting portions, and wherein both the thermosetting resin having exuded and the thermosetting resin inside the surface-material members cure, by heating, to integrate the surface materials to the honeycomb core.

10. A method of manufacturing a honeycomb laminated body having depressions and projections on a surface of at least one side of the honeycomb laminated body, the honeycomb laminated body including a honeycomb core and surface materials laminated on both sides of the honeycomb core, the method comprising:
a step of impregnating surface-material members with a thermosetting resin to provide impregnated surface-material members;
a step of laminating the impregnated surface-material members on both sides of the honeycomb core to provide a heat-compressing laminated body; and
a step of heat-compression shaping the heat-compressing laminated body by using a press-forming mold having a mold surface having protrusions, wherein the heat-compressing laminated body is compressed to crush the honeycomb core, with the protrusions of the mold surface, in a direction of a thickness of the honeycomb core to form crushed portions, wherein the crushed portions of the honeycomb core are shaped into depressions on a surface of the heat-compressing laminated body, the depressions entailing projections each of which is adjacent to a corresponding one of the depressions, the depressions and the projections constituting a depressions and projections form, and wherein both the thermosetting resin inside the impregnated surface-material members and the thermosetting resin having exuded from the impregnated surface-material members cure, by heating, to integrate the surface materials formed from the surface-material members to the honeycomb core.

11. The method of manufacturing a honeycomb laminated body of claim 10, wherein the honeycomb core is composed of an aluminum honeycomb.

12. The method of manufacturing a honeycomb laminated body of claim 10,
wherein each of the surface-material members includes a carbon-fiber body and
a porous sheet laminated on the carbon-fiber body, the carbon-fiber body including fiber bodies laminated on each other, the fiber bodies including a carbon-fiber woven fabric or a unidirectional carbon-fiber sheet,
wherein, in the step of laminating, the heat-compressing laminated body is formed by laminating the impregnated surface-material members on both sides of the honeycomb core, in a state in which the porous sheet abuts on the honeycomb core,
wherein, in the step of heat-compression shaping, the honeycomb core is crushed, with the protrusions of the mold surface, in the direction of the thickness of the honeycomb core to cause the honeycomb core to bite into the porous sheet at biting portions, the thermosetting resin exuding from the porous sheet at the biting portions, and
wherein, in the step of heat-compression shaping, both the thermosetting resin having exuded and the thermosetting resin inside the surface-material members cure to integrate the surface materials formed from the impregnated surface-material members to the honeycomb core.

13. The method of manufacturing a honeycomb laminated body of claim 9 or 12, wherein the porous sheet has a thickness of 0.5 mm to 2 mm.

14. The method of manufacturing a honeycomb laminated body of claim 9 or 12, wherein the porous sheet is composed of a foam body or a nonwoven fabric.

15. The method of manufacturing a honeycomb laminated body of claim 14, wherein the porous sheet is composed of the foam body having a density of 5 kg/m³ to 100 kg/m³ or the nonwoven fabric having a basis weight of 2 g/m² to 200 g/m².

16. The method of manufacturing a honeycomb laminated body of any one of claims 9 to 12, wherein the honeycomb core has a cell size of 1/32 inches to 1/1 inch.

## Amended claims

### Amended claims under Art. 19.1 PCT

1. (Currently amended) A honeycomb laminated body, comprising:
a honeycomb core; and
surface materials laminated on both sides of the honeycomb core, the surface materials including:
surface-material members impregnated with a thermosetting resin, the thermosetting resin being cured after impregnation, each of the surface-material members including:
a carbon-fiber body; and
a porous sheet laminated on the carbon-fiber body, the carbon-fiber body including:
fiber bodies laminated on each other, the fiber bodies including a carbon-fiber woven fabric or a unidirectional carbon-fiber sheet,
wherein the honeycomb core abuts on the porous sheet at an abutting position, wherein, at the abutting position, the honeycomb core bites into the porous sheet, and the thermosetting resin having exuded from the porous sheet cures, and
wherein the porous sheet is composed of a foam body.

2. (Currently amended) A honeycomb laminated body having depressions and projections on a surface of at least one side of the honeycomb laminated body, the honeycomb laminated body comprising:
a honeycomb core; and
surface materials laminated on both sides of the honeycomb core,
wherein the surface materials are formed by impregnation with a thermosetting resin and by curing the thermosetting resin,
wherein, at positions of the depressions on the surface, the honeycomb core is crushed in a direction of a thickness of the honeycomb core,
wherein the surface materials include:
surface-material members impregnated with the thermosetting resin, the thermosetting resin being cured after impregnation, each of the surface-material members including:
a carbon-fiber body; and
a porous sheet laminated on the carbon-fiber body, the carbon-fiber body including:
fiber bodies laminated on each other, the fiber bodies including a carbon-fiber woven fabric or a unidirectional carbon-fiber sheet, and
wherein the porous sheet is composed of a foam body.

3. (Original) The honeycomb laminated body of claim 2, wherein the honeycomb core is composed of an aluminum honeycomb.

4. (Currently amended) The honeycomb laminated body of claim 3,
wherein the honeycomb core abuts on the porous sheet at an abutting position, and
wherein, at the abutting position, the honeycomb core bites into the porous sheet, and the thermosetting resin having exuded from the porous sheet cures.

5. (Original) The honeycomb laminated body of claim 1 or 4, wherein the porous sheet has a thickness of 0.5 mm to 2 mm.

6. (Canceled)

7. (Currently amended) The honeycomb laminated body of claim 1 or 2, wherein the porous sheet is composed of a foam body having a density of 5 kg/m³ to 100 kg/m³.

8. (Currently amended) The honeycomb laminated body of any one of claims 1 to 5 and 7, wherein the honeycomb core has a cell size of 1/32 inches to 1/1 inch.

9. (Currently amended) A method of manufacturing a honeycomb laminated body including surface materials laminated on both sides of a honeycomb core, the surface materials including surface-material members impregnated with a thermosetting resin, the thermosetting resin being cured after impregnation, each of the surface-material members including a carbon-fiber body and a porous sheet laminated on the carbon-fiber body, the carbon-fiber body including fiber bodies laminated on each other, the fiber bodies including a carbon-fiber woven fabric or a unidirectional carbon-fiber sheet, the method comprising:
a step of impregnating the surface-material members with the thermosetting resin;
a step of laminating, on both sides of the honeycomb core, the surface-material members impregnated with the thermosetting resin in a state in which the honeycomb core abuts on the porous sheet so as to provide a heat-compressing laminated body; and
a step of heat-compressing the heat-compressing laminated body, wherein the heat-compressing laminated body is compressed to cause the honeycomb core to bite into the porous sheet at biting portions, the thermosetting resin exuding from the porous sheet at the biting portions, and wherein both the thermosetting resin having exuded and the thermosetting resin inside the surface-material members cure, by heating, to integrate the surface materials to the honeycomb core,
wherein the porous sheet is composed of a foam body.

10. (Currently amended) A method of manufacturing a honeycomb laminated body having depressions and projections on a surface of at least one side of the honeycomb laminated body, the honeycomb laminated body including a honeycomb core and surface materials laminated on both sides of the honeycomb core, the method comprising:
a step of impregnating surface-material members with a thermosetting resin to provide impregnated surface-material members;
a step of laminating the impregnated surface-material members on both sides of the honeycomb core to provide a heat-compressing laminated body; and
a step of heat-compression shaping the heat-compressing laminated body by using a press-forming mold having a mold surface having protrusions, wherein the heat-compressing laminated body is compressed to crush the honeycomb core, with the protrusions of the mold surface, in a direction of a thickness of the honeycomb core to form crushed portions, wherein the crushed portions of the honeycomb core are shaped into depressions on a surface of the heat-compressing laminated body, the depressions entailing projections each of which is adjacent to a corresponding one of the depressions, the depressions and the projections constituting a depressions and projections form, and wherein both the thermosetting resin inside the impregnated surface-material members and the thermosetting resin having exuded from the impregnated surface-material members cure, by heating, to integrate the surface materials formed from the surface-material members to the honeycomb core,
wherein each of the surface-material members includes a carbon-fiber body and
a porous sheet laminated on the carbon-fiber body, the carbon-fiber body including fiber bodies laminated on each other, the fiber bodies including a carbon-fiber woven fabric or a unidirectional carbon-fiber sheet, and
wherein the porous sheet is composed of a foam body.

11. (Original) The method of manufacturing a honeycomb laminated body of claim 10, wherein the honeycomb core is composed of an aluminum honeycomb.

12. (Currently amended) The method of manufacturing a honeycomb laminated body of claim 10,
wherein, in the step of laminating, the heat-compressing laminated body is formed by laminating the impregnated surface-material members on both sides of the honeycomb core, in a state in which the porous sheet abuts on the honeycomb core,
wherein, in the step of heat-compression shaping, the honeycomb core is crushed, with the protrusions of the mold surface, in the direction of the thickness of the honeycomb core to cause the honeycomb core to bite into the porous sheet at biting portions, the thermosetting resin exuding from the porous sheet at the biting portions, and
wherein, in the step of heat-compression shaping, both the thermosetting resin having exuded and the thermosetting resin inside the surface-material members cure to integrate the surface materials formed from the impregnated surface-material members to the honeycomb core.

13. (Currently amended) The method of manufacturing a honeycomb laminated body of claim 9 or 10, wherein the porous sheet has a thickness of 0.5 mm to 2 mm.

14. (Canceled)

15. (Currently amended) The method of manufacturing a honeycomb laminated body of claim 9 or 10, wherein the porous sheet is composed of the foam body having a density of 5 kg/m³ to 100 kg/m³.

16. (Original) The method of manufacturing a honeycomb laminated body of any one of claims 9 to 12, wherein the honeycomb core has a cell size of 1/32 inches to 1/1 inch.
